# EUROPÄISCHE PATENTSCHRIFT

(11) **EP 1 306 293 B1**
(45) Veröffentlichungstag und Bekanntmachung des Hinweises auf die Patenterteilung: **18.01.2006**
(21) Anmeldenummer: 02023565.1
(22) Anmeldetag: 23.10.2002
(51) Int. Cl.: B62D 55/12

(54) **Radaufbau für Raupenantrieb und Raupenfahrzeug sowie Raupenantrieb und Raupenfahrzeug als solches**
Wheel construction for an endless track unit and a tracked vehicle and also an endless track unit and a tracked vehicle like that
Construction de roue pour chenille et véhicule à chenilles, et aussi chenille et véhicule à chenilles

(30) Priorität: 25.10.2001 US 3894
(43) Veröffentlichungstag der Anmeldung: 02.05.2003
(73) Patentinhaber: DEERE & COMPANY, Moline, Illinois 61265-8098 (US)
(72) Erfinder: Smith, Eric Brian, Independence, IA 50644 (US); Rehmert, Craig Edward, Jesup, IA 50648 (US)
(74) Vertreter: Lau-Loskill, Philipp

(56) Entgegenhaltungen:
- DE-A- 2 617 342
- US-A- 4 235 270

## Beschreibung

Die Erfindung betrifft einen Radaufbau für ein Raupenantrieb, wobei der Radaufbau einen Reifen mit einem einen Elastomer enthaltenden Reifenkörper, ein den Reifenkörper tragendes Rad, einen ersten Seitenflansch und einen als separates und ausgeprägtes Element ausgebildeten zweiten Seitenflansch enthält. Des Weiteren betrifft die Erfindung einen Raupenkettenantrieb und ein Raupenfahrzeug mit einem derartigen Radaufbau.

Raupenantriebe für Raupenfahrzeuge enthalten eine Mehrzahl von Radaufbauten, die eine Raupenbahn definieren, wobei diese Bahn von der Raupenlaufbahn, im Folgenden auch Raupe genannt, durchlaufen und dadurch das Fahrzeug entlang des Bodens bewegt wird. Ein derartiger Raupenantrieb kann beispielsweise ohne Einschränkungen, auf jeder Seite des Fahrzeugs einen Antriebsradaufbau (z. B. im hinteren Bereich des Fahrzeugs), einen Laufradaufbau (z. B. im vorderen Bereich des Fahrzeugs) und einen oder mehrere mittlere Leitradaufbauten, die den Bodenkontakt der Raupe zwischen dem Antriebsradaufbau und dem Laufradaufbau unterstützen, enthalten.

Bei einigen Ausführungen enthalten derartige Raupenantriebe als zusätzliche Elemente einen oder mehrere gesondert ausgebildete Spannradaufbauten, z. B. in einem oberen Bereich der Raupenbahn. Bei anderen Ausführungen ist die Spannfunktion zusätzlich zu der eigentlichen Primärfunktion des entsprechenden Radaufbaus in den Arbeitsvorgang eines oder mehrerer der anderen Radaufbauten als Sekundärfunktion integriert.

Die Strukturen der verschiedenen Radaufbauten sind normalerweise entsprechend der jeweiligen Einsatzfälle, für die jeder solcher Radaufbau vorgesehen ist, ausgestaltet und ausgelegt. Folglich sind Antriebsradaufbauten entsprechend ihrer Antriebsfunktion ausgelegt.

Laufradaufbauten sind entsprechend ihrer Funktion ausgelegt, nämlich um erhebliche Umschlingungswinkel der Raupe umzusetzen. Sie sind normalerweise derart ausgebildet, dass sie die Funktionen betreffend einer Steuerung der Bewegungsrichtung des Fahrzeugs ausführen oder unterstützen können. Da die Laufradaufbauten an einem gegebenen Fahrzeug üblicherweise nicht die Antriebsbelastungen des Fahrzeugs aufnehmen, sind die Laufradaufbauten normalerweise weniger komplex und möglicherweise weniger robust als die Antriebsradaufbauten ausgebildet.

Mittlere Leitradaufbauten sind ausgelegt und montiert, um eine abwärtsgerichtete Unterstützung der darunter liegenden Raupe zu leisten, und können daher zu diesem Zweck mit einer Federkraft beaufschlagt sein. Mittlere Leitradaufbauten üben üblicherweise keine antreibenden oder steuernden Funktionen aus.

Ähnlich dazu sind Spannradaufbauten, die in den Figuren dieser Offenbarung nicht dargestellt sind, dahingehend ausgelegt, um eine normalerweise aufwärts gerichtete Unterstützung der Raupe zu leisten und sind daher auch üblicherweise ausgelegt, mit einer Federkraft vom Fahrzeugrahmen beaufschlagt zu werden. Wie die mittleren Leitradaufbauten üben auch Spannradaufbauten üblicherweise keine antreibenden oder steuernden Funktionen aus.

Während die Antriebsradaufbauten und/oder die Laufradaufbauten antreibende und steuernde Funktionen ausüben und normalerweise relativ robust und möglicherweise komplexer ausgebildet sind, haben mittlere Leitradaufbauten und Spannradaufbauten normalerweise weniger anspruchsvolle Funktionen auszuüben und sind daher um einiges weniger robust und möglicherweise einfacher im Design ausgebildet.

Die in Raupenantrieben verwendeten Radaufbauten weisen üblicherweise als äußere antreibende Oberfläche eine äußere Elastomerschicht auf, wie z. B. Kautschuk. Solch eine elastomere Schicht ist nachgiebig, so dass wenigstens ein gewisses Maß an Dämpfung des Fahrzeugrahmens gegenüber einem unebenen Boden, über den ein solches Fahrzeug fährt, geleistet wird. Des Weiteren erzeugt die äußere elastomere Schicht weniger Geräusche im Raupenantrieb als eine metallene Außenschicht des Radaufbaus. Ferner besitzt die elastomere Außenschicht des Radaufbaus einen höheren Reibungskoeffizienten als gebräuchliche Metalle, wodurch ein Antreiben der Raupe durch Reibung erleichtert wird.

Die elastomere Schicht eines Radaufbaus ist normalerweise auf ein metallenes Rad montiert, welches wiederum auf eine Nabe montiert ist und diese wiederum auf eine dazugehörige Achse oder andere Halterung. Verschiedene Ausführungen wurden für eine derartige Montage einer elastomeren Schicht auf ein Rad vorgeschlagen.

Beispielsweise werden bei herkömmlichen Ausführungen, wie sie in der US 5,302,012 und US 5,288,143 offenbart werden, in den Radaufbau integrierte einschließende Flansche verwendet, wobei die Flansche sich über die Außenfläche einer elastomeren Schicht hinaus erstrecken und diese teilweise überdecken, so dass die übertragende elastomere Oberfläche durch die Flansche derart beeinträchtigt wird, dass diese Ausführung für Raupen, die eine im Wesentlichen glatte innere Kontaktfläche aufweisen, bei der keine umlaufende Profilierung vorgesehen ist, unbraüchbar ist.

Eine weitere herkömmliche Ausführung beschreibt die US 3, 871, 719, in der eine spulenförmige Metallfeder als mit einer Raupe in Eingriff stehende Außenfläche eines Radaufbaus eingesetzt wird, wobei die Metallfeder durch einen Seitenflansch gehalten wird, welcher über die raupeneingreifende Außenfläche hinausragt. Auch diese Ausführung ist für in Querrichtung nicht profilierte Raupen ungeeignet und weist zudem schlechte Dämpfungseigenschaften des Radaufbaus auf.

Noch eine weitere herkömmliche Ausführung beschreibt die US 5,131,731, in der Abstandsbuchsen enthalten sind, die in ein elastomeres Reifenmaterial eingeformt sind und dieses durchdringen, wobei die Buchsen Bolzen aufnehmen, die sich zwischen am Reifen und Rad gegenüberliegenden Halteringen erstrecken und dadurch den Reifen am Rad halten. Nachteilig ist hierbei, dass diese Lösung einen relativ aufwändigen Radaufbau erfordert und zum Auswechseln des Reifens der Zugang von beiden Seiten zum Rad erforderlich ist, so dass dazu der Radaufbau vom Raupenantrieb demontiert werden muss.

Alle der oben genannten Ausführungen sind relativ komplex, was sowohl hinsichtlich der Herstellung als auch der Wartung derartiger Ausführungen mit hohen Kosten verbunden ist.

Des Weiteren sind einfachere Ausführungen für mittlere Leiträderaufbauten bekannt, in denen ein nicht luftbefüllter Gummireifen mittels Klebemittel an eine Außenfläche eines Rades montiert ist, um dadurch einen relativ kostengünstigen Reifenaufbau zu schaffen. Das Rad weist eine Außenfläche auf, welche die Innenfläche des Reifens aufnimmt. Derartige mittels Klebemittel montierte Reifen können sich jedoch aufgrund der harten Betriebsbedingungen, unter denen Raupenfahrzeuge normalerweise betrieben werden, vom Rad lösen, was sowohl ein Auswechseln des Reifens als auch des Rades erfordert.

Die der Erfindung zugrunde liegende Aufgabe wird darin gesehen, einen Radaufbau für ein Raupenantrieb der eingangs genannten Art sowie ein Raupenantrieb und ein Raupenfahrzeug als solches anzugeben, durch welches die vorgenannten Probleme überwunden werden. Insbesondere soll ein Radaufbau geschaffen werden, mit einem relativ einfachem Aufbau, der einen relativ einfach ausgebildeten Reifen aufweist, wobei der Reifen auf ein relativ einfach ausgebildetes Rad montiert werden soll. Des Weiteren besteht die Aufgabe darin, einen Radaufbau zu schaffen, der das Auswechseln des Reifens ohne Auswechseln des Rades ermöglicht. Ferner besteht die Aufgabe darin, einen Radaufbau zu schaffen, bei dem der Reifen auf dem Rad gehalten wird, ohne dass Teile des Montageaufbaus durch den Reifen geführt werden, die eine Öffnung erfordern, die sich außerhalb des Umfangs der Innenfläche des Reifens quer durch den Reifen erstrecken. Außerdem besteht die Aufgabe darin, den Radaufbau derart zu gestalten, dass der Reifen die gesamte Breite der Außenfläche des Rades abdecken kann, so dass der Einsatz eines solchen Radaufbaus in Raupenlaufwerken mit in Querrichtung nicht profilierten Raupen als universell einsetzbarer Radaufbau möglich ist.

Die Aufgabe wird erfindungsgemäß durch die Lehre eines der Patentansprüche 1, 15 und 16 gelöst. Weitere vorteilhafte Ausgestaltungen und Weiterbildungen der Erfindung gehen aus den Unteransprüchen hervor.

Erfindungsgemäß enthält ein Radaufbau für ein Raupenantrieb der eingangs genannten Art einen Reifen mit einem einen Elastomer enthaltenden Reifenkörper. Der Reifenkörper enthält ein Reifenäußeres, mit einer inneren Fläche, einer äußeren Fläche und entsprechende erste und zweite Seitenflächen, die sich im Wesentlichen von der äußeren Fläche zur inneren Fläche erstrecken. Des Weiteren ist wenigstens eine erste am Reifenäußeren des Reifenkörpers zwischen der inneren Fläche und der ersten Seitenfläche ausgebildete Vertiefung vorgesehen, wobei diese erste Vertiefung eine seitlich nach außen gerichtete Fläche definiert. Ferner ist der Reifen mit mehreren Drähten versehen, die nahe der inneren Fläche des Reifenkörpers verlaufen und in dem Elastomer eingebettet und von diesem umgeben sind. Unter dem Begriff Draht sollen im Rahmen der vorliegenden Erfindung neben einzelnen Stabelementen auch aus mehreren Elementen bestehende Seile und dergleichen fallen. Der Radaufbau enthält des Weiteren ein Rad mit einem inneren Flansch, zur Montage und drehbaren Lagerung des Rades an bzw. auf einer Achse. Das Rad ist ferner mit einem äußeren Flansch versehen, der gegenüberliegende erste und zweite Seitenflächen und eine Außenfläche aufweist, wobei letztere einer äußeren Fläche des Rades entspricht und wobei die Außenfläche des Rades die innere Fläche des Reifens auf einer Rad-Reifen-Grenzfläche aufnimmt. Dazu sind die innere Fläche des Reifens und die Außenfläche des Rades derart aufeinander abgestimmt ausgebildet, dass sich der Reifen mit einer Übergangspassung auf dem Rad montieren lässt. Der innere und äußere Flansch des Rades ist durch einen Steg miteinander verbunden. Der Steg kann beispielsweise als Radscheibe ausgebildet sein, oder mehrere Speichen enthalten. Am äußeren Flansch des Rades ist im Bereich der ersten Seitenfläche ein erster Seitenflansch in Form eines sich radial nach außen erstreckenden über die Außenfläche des äußeren Flanschs hinausragenden Flansches ausgebildet, wobei der erste Seitenflansch eine erste Stützwand enthält, die in Richtung der Mitte der Außenfläche des Rades gerichtet ist und eine seitlich ausgerichtete Fläche bzw. die Stützfläche des Reifens abstützt. Ein als separates Element ausgebildeter zweiter Seitenflansch ist an der zweiten Seitenfläche des äußeren Flanschs angeordnet und enthält bzw. bildet eine zweite Stützwand, die in Richtung der Mitte der Außenfläche des äußeren Flanschs gerichtet ist und wenigstens teilweise radial ausgerichtet ist. Der zweite Seitenflansch ist lösbar an die zweite Seite des äußeren Flanschs des Rades montiert. Die durch den zweiten Seitenflansch geschaffene zweite Stützwand stützt eine wenigstens teilweise radial verlaufende zweite seitlich ausgerichtete Stützfläche des Reifens ab. Bei einer derartigen Ausbildung des Radaufbaus kann der Reifen über die Außenfläche des Rades geschoben werden und wird auf einer Radseite durch den ersten Seitenflansch abgestützt. Auf der anderen Radseite wird der zweite Seitenflansch montiert, der dadurch in die Vertiefung an der zweiten Seitenfläche des Reifens eingreift und die nach außen gerichtete Seitenfläche der Vertiefung abstützt. Der Reifen wird so zwischen dem ersten und dem zweiten Seitenflansch eingeschlossen und auf dem Rad gehalten. Die in den Reifen eingeformten Drähte verstärken den Reifen dahingehend, dass er durch einwirkende Kräfte nicht über die Seitenflansche hinaus geschoben werden kann. Der Radaufbau weist somit einen relativ einfachen Aufbau auf, der im Wesentlichen durch einen inneren Flansch, einen äußeren Flansch, einen beide Flansche verbindenden Steg, einem ersten im äußeren Flansch enthaltenen Seitenflansch, einem zweiten lösbar am äußeren Flansch befestigten Seitenflansch und einem zwischen den Seitenflanschen angeordneten Reifen ausgebildet ist.

In einer besonders bevorzugten Ausgestaltung der Erfindung ist am Reifenäußeren des Reifenkörpers eine weitere Vertiefung ausgebildet, so dass zwischen der inneren Fläche und den entsprechenden Seitenflächen eine erste und zweite Vertiefung ausgebildet ist, wobei die beiden Vertiefungen im Wesentlichen gleiche Abmessungen aufweisen und jeweils eine seitlich nach außen ausgerichtete Fläche definieren. Vorzugsweise ist dabei die Außenfläche des äußeren Flanschs mit einem ersten Bereich kleineren Durchmessers, einem sogenannten Kleindurchmesserbereich versehen, wobei der Kleindurchmesserbereich sich ausgehend von der zweiten Seitenfläche des Rades in Richtung der ersten Seitenfläche erstreckt. Der Kleindurchmesserbereich ist dabei über eine Breite von wenigstens 60% entlang der Breite des Rades zwischen der zweiten und ersten Seitenfläche ausgebildet. Entsprechend dazu weist die Außenfläche des Rades des Weiteren einen Bereich größeren Durchmessers, einen sogenannten Großdurchmesserbereich auf, der den ersten Seitenflansch an der ersten Seitenfläche des äußeren Flansches bildet. Dieser erste Seitenflansch weist einen zweiten Durchmesser auf, der größer ist als der erste Durchmesser des Kleindurchmesserbereichs und enthält die erste Stützwand, welche die seitlich nach außen gerichtete Fläche der ersten Vertiefung am Reifenäußeren abstützt. Die seitlich nach außen gerichteten Flächen in den Vertiefungen der Reifenaußenfläche werden somit von der ersten und zweiten Stützwand der Seitenflansche abgestützt.

Vorzugsweise sind die Unterschiede zwischen den Durchmesserbeträgen des ersten und zweiten Durchmessers größer als die Dehnungsfähigkeit der Verbindung aus Draht und Elastomer des Reifens, um bei an das Rad montiertem zweiten Seitenflansch ein seitliches Abrutschen des Reifens vom Rad zu vermeiden.

Die Ausgestaltung mit zwei Vertiefungen, welche in Form von gegenüberliegenden Aussparungen an den Rändern der inneren Fläche des Reifenäußeren ausgebildet sind, hat den Vorteil, dass die äußere Fläche des Reifens sich über die gesamte Breite des Radaufbaus erstrecken kann, ohne dass ein Seitenflansch die Reifenseitenfläche überdeckt oder gar über die äußere Reifenfläche hinausragt. Auf diese Weise kann der Radaufbau universell, beispielsweise als Laufrad, mittleres Leitrad oder auch als Spannrad bzw. Spannrolle, eingesetzt werden.
In einer besonders bevorzugten Ausgestaltung der Erfindung enthält der zweite Seitenflansch einen mit Bohrungen versehenen ringförmigen Körper, wobei die Bohrungen Befestigungsmittel, insbesondere Schrauben aufnehmen, mit denen der ringförmige Körper lösbar an die zweite Seitenfläche des äußeren Flanschs befestigt wird. Dabei weist der zweite Seitenflansch einen ringförmigen äußeren Schenkel auf, der sich ausgehend vom ringförmigen Körper zwischen der Außenfläche des äußeren Flanschs und der inneren Fläche des Elastomerreifens an der zweiten Vertiefung in Richtung der Mitte der Außenfläche des äußeren Flanschs erstreckt. Vorzugsweise wird der zweite Seitenflansch durch Befestigungsmittel an den äußeren Flansch des Rades montiert, die sich durch Bohrungen im zweiten Seitenflansch und in die zweite Seitenfläche des äußeren Flanschs erstrecken. Vorzugsweise enthält dabei der Rand der zweiten Seitenfläche des Rades Sacklochbohrungen, in denen Befestigungsschrauben zur Befestigung des zweiten Seitenflanschs an die zweite Seitenfläche aufgenommen werden. Zur Befestigung des zweiten Seitenflansches sind auch andere Befestigungsmittel denkbar, die von den Sacklochbohrungen aufgenommen werden können. Insbesondere können, anstatt der Sacklochbohrungen, auch Durchgangsbohrungen vorgesehen sein, von denen Befestigungsschrauben oder dergleichen aufgenommen werden können. Ebenso ist es denkbar den zweiten Seitenflansch auch am Steg oder am inneren Flansch des Rades zu befestigen.

In einer besonders bevorzugten Ausgestaltung der Erfindung sind die Drähte als Stahldrähte oder Stahlseile ausgebildet. Hier sind auch andere Ausführungen denkbar, die eine Ausdehnung des Elastomers bzw. des Reifens beschränken bzw. diesen verstärken. Beispielsweise können auch aus Kunststoff oder Nylon hergestellte Drähte, Seile oder Bänder bzw. Fäden eingesetzt werden, die eine entsprechende Festigkeit aufweisen.

In einer besonders bevorzugten Ausgestaltung der Erfindung bildet die äußere Fläche des Reifens über die gesamte Breite des Radaufbaus die Außenfläche des Radaufbaus. Dadurch wird gewährleistet, dass der Reifen über die gesamte Breite des Radaufbaus wirken kann, wobei die am Reifenrand ausgebildeten Vertiefungen die Seitenflansche vollständig überdecken.

In einer bevorzugten Ausgestaltung der Erfindung ist der Reifen frei von Befestigungsmitteln, die sich zur Fixierung des Reifens auf das Rad durch denselben erstrecken und/oder frei von Klebestoffen auf der Rad-Reifen-Grenzfläche. Dadurch wird ein einfacher Aufbau des Reifens sowie eine einfach durchführbare Austausch- bzw. Auswechselprozedur geschaffen, ohne dass der Radaufbau vollständig vom Raupenlaufwerk entfernt werden muss.

In einer weiteren bevorzugten Ausgestaltung der Erfindung erstreckt sich der Kleindurchmesserbereich des Rades vorzugsweise über wenigstens 70% entlang der Breite des Rades oder vorzugsweise über 80% entlang der Breite des Rades zwischen der zweiten und ersten Seitenfläche. Dadurch wird gewährleistet, dass eine möglichst große Rad-Reifen-Grenzfläche geschaffen wird, mit der eine wesentliche Kraftübertragung zwischen Rad und Reifen stattfindet.

In einer weiteren bevorzugten Ausgestaltung der Erfindung weist der äußere Flansch eine relativ größere Breite zwischen einer Mittellinie des Rades und der ersten Seitenfläche des ersten Seitenflanschs und eine relativ kleinere Breite zwischen der Mittellinie und der zweiten Seitenfläche auf, wobei sich die Mittellinie zentriert durch die Mitte des Steges erstreckt und zum Kleindurchmesserbereich senkrecht steht. Vorzugsweise entspricht dabei die Breite einer Kombination aus kleinerer Breite des äußeren Flansches und dem zweiten Seitenflansch im Wesentlichen der größeren Breite des äußeren Flanschs. D h. dass bei montiertem zweiten Seitenflansch die Breite des Radaufbaus von der Seitenfläche des zweiten Seitenflanschs bis zur Mittellinie des Rades im Wesentlichen der Breite von der ersten Seitenfläche des ersten Seitenflanschs bis zur Mittellinie entspricht. Dadurch kann der Reifen in symmetrischer Bauweise ausgeformt werden, wobei sowohl die Kräfteverteilung auf der Reifenoberfläche als auch die Gewichtsverteilung und Massenträgheit des Reifens symmetrisch zur Radmitte ausgerichtet sind. Der gesamte Radaufbau ist somit bei montiertem zweiten Seitenflansch symmetrisch zur Mitte ausgestaltet.

In einer weiteren bevorzugten Ausgestaltung der Erfindung weist der Elastomer des Elastomerreifens bzw. der Reifenwerkstoff ein Kautschukgemisch auf. Der Kautschuk oder Gummi bietet den Vorteil, dass relativ hohe Reibkoeffizienten erzielt und hohe Dämpfungs- bzw. Federungseigenschaften sowie ein hohes Dehnungsvermögen gewährleistet werden kann. Ein hoher Reibkoeffizient wirkt sich dabei positiv auf die Kraftübertragung sowohl von Reifen zur Raupe als auch von dem Reifen auf das Rad aus, so dass ein Durchrutschen des Reifens vermieden wird. Die Dämpfungs- bzw. Federungseigenschaften wirken sich zum einen vorteilhaft gegenüber der Geräuschentwicklung des Raupenlaufwerks und gegenüber einem Dämpfungsmechanismus des Fahrzeugs bei Betrieb auf unebenem Terrain aus. Das hohe Dehnungsvermögen des Reifens ermöglicht eine optimale Anpassung des Reifens an die Außenfläche des Rades, so dass auch hohe Übertragungskräfte durch Schaffung entsprechender Übergangspassungen erzielt werden können.

In einer bevorzugten Ausgestaltung der Erfindung schließen die erste und die zweite Stützwand mit dem Kleindurchmesserbereich der Außenfläche des äußeren Flanschs je einen Winkel ein, der nicht größer als 135° und nicht kleiner als 45° ist, wobei jeweils ein Schenkel der Winkel von der entsprechenden Stützwand zur Mitte der Außenfläche des äußeren Flanschs gerichtet ist. Vorzugsweise betragen die Winkel 90°, so dass die Stützwände senkrecht auf der Außenfläche des äußeren Flanschs liegen. Durch entsprechende Ausbildung der Winkel, d.h. durch entsprechende Ausformung der Vertiefungen und der Seitenflansche, kann der Reifen mehr oder weniger stark auf dem Rad fixiert werden, wobei die erforderlichen Grenzwinkel einzuhalten sind, da der Reifen bei zu großem Winkel über den Flansch rutschen könnte bzw. bei zu kleinem Winkel durch die Flanschwirkung während des Betriebs angehoben werden könnte.

Erfindungsgemäß wird des Weiteren ein Raupenantrieb bzw. ein Raupenkettenantrieb mit einer Antriebsmaschine, einer Raupe bzw. Raupenkette und einem Antriebsstrang vorgesehen, wobei die Raupe bzw. Raupenkette um eine Mehrzahl von Rädern montiert ist und der Antriebsstrang eine Antriebskraft von der Antriebsmaschine zu wenigstens einem Rad überträgt und wobei wenigstens eines der in der Raupe bzw. Raupenkette laufenden Räder einen erfindungsgemäßen Radaufbau aufweisen. Dadurch werden die vorausgehend genannten Vorteile der Erfindung auf ein Raupenantrieb bzw. Raupenkettenantrieb übertragen.

Ferner wird erfindungsgemäß ein Raupenfahrzeug vorgeschlagen, mit einem Rahmen, einer Antriebsmaschine, einem Raupenlaufwerk und einem Antriebsstrang. Der Antriebsstrang überträgt eine Antriebskraft von der Antriebsmaschine zum Raupenlaufwerk, wobei das Raupenlaufwerk eine Raupe bzw. Raupenkette und eine Mehrzahl von Rädern enthält, um die die Raupe bzw. Raupenkette montiert ist und wobei wenigstens eines der Räder einen erfindungsgemäßen Radaufbau enthält. Dadurch werden die vorausgehend genannten Vorteile der Erfindung auf ein Raupenfahrzeug übertragen.

In einer besonders bevorzugten Ausgestaltung der Erfindung enthält das Raupenfahrzeug Radaufbauten, die ein mittleres Leitrad oder ein führendes Laufrad darstellen. Denkbar ist auch der Einsatz eines erfindungsgemäßen Radaufbaus als Spannrad oder Spannrolle innerhalb einer Raupe bzw. Raupenkette.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine Seitenansicht eines erfindungsgemäßen landwirtschaftlichen Raupenfahrzeugs,
- Fig. 2: eine perspektivische Seitenansicht eines bei einem Raupenlaufwerk des erfindungsgemäßen Raupenfahrzeugs eingesetzten Radaufbaus und
- Fig. 3: eine Querschnittsansicht des neuartigen Radaufbaus des erfindungsgemäßen Raupenfahrzeugs entsprechend der Schnittebene 3-3 aus Fig. 2.

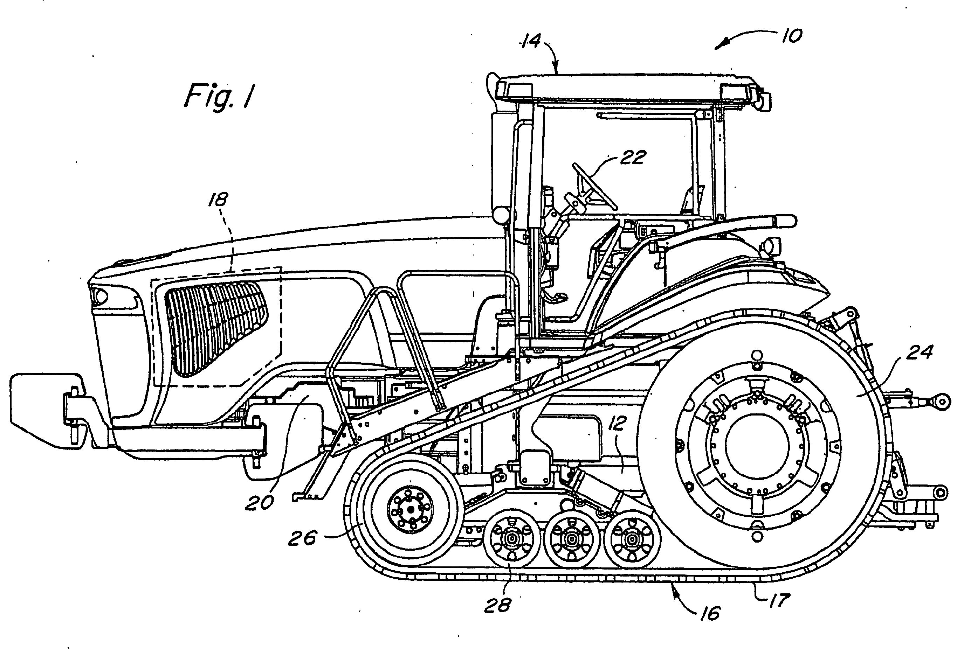

In Figur 1 ist ein spurgebundener landwirtschaftlicher Schlepper 10 dargestellt, mit einem Rahmen 12, einer Fahrerkabine 14, einem eine Raupe 17 enthaltenes Raupenlaufwerk 16, einem Motor 18, einem Antriebsstrang 20, der Antriebsleistung vom Motor zum Raupenlaufwerk überträgt und mit verschiedenen in der Kabine 14 befindlichen Bedienungselemente 22 zur Steuerung des Fahrbetriebs und anderer vom Schlepper ausgeführter Operationen.

Das sich auf der linken Seite des Schleppers befindliche abgebildete Raupenlaufwerk enthält ein Antriebsrad 24, ein Laufrad 26 und mittlere Leiträder 28, von denen drei abgebildet sind. Ein gleichartiges komplementäres zweites Raupenlaufwerk 16 (nicht gezeigt) ist auf der rechten Seite des Schleppers 10 angeordnet, wobei beide Raupenlaufwerke 16 miteinander kombiniert zum Antreiben und zur Lenkung des Schleppers 10 eingesetzt werden.

Die Antriebsräder 24 werden zum Antrieb des Schleppers 10 genutzt und dienen normalerweise der Lenkung des Schleppers 10 als auch der Abstützung des Schleppers 10 gegenüber dem Boden. Die Antriebsräder 24 sind üblicherweise robuster, größer und komplexer sowohl als die Laufräder 26 als auch als die mittleren Leiträder 28 ausgebildet.

Die Laufräder 26 sind üblicherweise größer als die mittleren Leiträder 28 ausgebildet, damit sie den Spannungen, die zum einen beim Lenken an den Laufrädern 26 auftreten und die zum anderen durch die Umlenkung der Raupe 17 um nahezu (jedoch weniger) 180° verursacht werden, standhalten. Dementsprechend müssen die Laufräder 26 einigermaßen robust ausgebildet sein, sie stellen jedoch keine am Antrieb des Schleppers 10 beteiligte Komponente dar, weshalb die Laufräder 26 normalerweise weniger robust als die Antriebsräder 24 ausgebildet sind.

Die mittleren Leiträder 28 sind zwischen dem Antriebsrad 24 und dem dazugehörigen Laufrad 26 angeordnet und stützen den Rahmen 12 gegenüber der Raupe 17 derart ab, dass die effektive Bodenkontaktfläche, mit der sich der Schlepper durch die Raupe auf dem Boden abstützt, vergrößert wird, um dadurch eine durch den Schlepper verursachte Bodenbelastung und Bodenkompression in Grenzen zu halten.

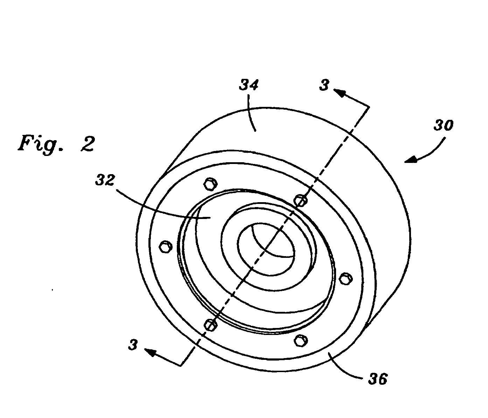

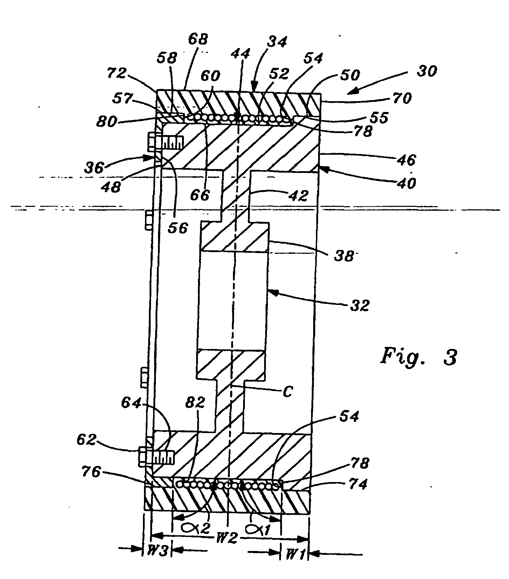

Die Figuren 2 und 3 zeigen einen Radaufbau 30 mit einem Rad 32, einem Reifen 34 und einem ringförmigen Halteflansch 36. Das Rad 32 enthält einen inneren Flansch 38, zur Verbindung mit einer Radnabe (nicht gezeigt), einen äußeren Flansch 40 und einen Steg 42, der den inneren Flansch 38 mit dem äußeren Flansch 40 verbindet.

Der innere Flansch 38 formt üblicherweise eine zylindrische Öffnung, die eine Radnabe, eine Achse oder dergleichen aufnimmt. Die Ausbildung des inneren Flansches 38 ist normalerweise nicht entscheidend für die Funktionalität der Erfindung, demzufolge verschiedenste Ausbildungen für den inneren Flansch 38 bei dieser Erfindung eingesetzt werden können.

Die Ausbildung des Steges 42 ist normalerweise nicht entscheidend für die Funktionalität der Erfindung, demzufolge kann der Steg 42 beispielsweise als Radscheibe ausgebildet sein oder aus mehreren Speichen bestehen bzw. auf jede andere bekannte Art ausgebildet sein kann.

Die Ausbildung des äußeren Flansches 40 und die Ausbildung des Reifens 34 sind entscheidend für die Erfindung. Wie aus Fig. 2 und 3 zusammen hervorgeht, enthält der äußere Flansch 40 eine Außenfläche 44, deren Durchmesser im Wesentlichen den Durchmesser der Außenfläche des Rades 32 bildet. Der äußere Flansch 40 enthält des Weiteren eine rechte Seitenfläche 46 und eine gegenüberliegende linke Seitenfläche 48.

Die Außenfläche 44 enthält einen ersten Bereich 50 mit größerem Durchmesser (Großdurchmesserbereich) und einen zweiten Bereich 52 mit kleinerem Durchmesser (Kleindurchmesserbereich). Wie in Fig. 3 zu sehen ist, erstreckt sich der Großdurchmesserbereich 50 entsprechend einer Vergrößerung der rechten Seitenfläche 46 nach außen und ausgehend von der äußeren Kante der rechten Seitenfläche 46 nach links. Dabei wird ein Teil der Außenfläche 44 des äußeren Flanschs 40 gebildet. Der Großdurchmesserbereich 50 erstreckt sich über eine erste Breite W1, die weniger als 40% einer zweiten Gesamtbreite W2 der Außenfläche 44 des äußeren Flansches 40 beträgt. Somit erstreckt sich der Großdurchmesserbereich 50 über weniger als 40% der Breite des Rades 32. Normalerweise erstreckt sich der Großdurchmesserbereich 50 über ca. 10% bis ca. 30%, vorzugsweise über ca. 20% bis ca. 25% der Breite des Rades 32. Dementsprechend deckt der Kleindurchmesserbereich 52 der Außenfläche 44 üblicherweise wenigstens 60% und bis zu ca. 90%, vorzugsweise ca. 70% bis ca. 80%, insbesondere ca. 75% der Gesamtbreite W2 der Außenfläche 44 ab.

Unter Berücksichtigung der dargestellten Ausbildung, um eine symmetrische Ausgestaltung des Rades 34 zu schaffen, und unter Berücksichtigung der Dicke eines seitlichen Abschnittes 56, weist der äußere Flansch 40 eine entsprechend größere Breite zwischen einer Mittellinie C und der rechten Seitenfläche 46 auf als zwischen der Mittellinie C und der linken Seitenfläche 48, wobei sich die Mittellinie C zentriert zum Steg 42 durch diesen erstreckt und senkrecht zur Oberfläche des Kleindurchmesserbereichs 52 verläuft. Der Unterschied zwischen der größeren Breite und der kleineren Breite entsteht durch die Dicke des seitlichen Abschnitts 56, wobei die eigentliche Stützfläche für die innere Oberfläche und die Aussparungen des Reifens 34 eine symmetrische Auflage für den Reifen 34 bildet.

Am linken Ende des Großdurchmesserbereichs 50 erstreckt sich die Außenfläche 44 des äußeren Flanschs 40 in einem rechten Winkel α1 nach innen, hin zum Kleindurchmesserbereich 52, wobei sich ein Schenkel dieses Winkels α1 zwischen dem Kleindurchmesserbereich 52 und der Umlauffläche des Großdurchmesserbereichs 50 erstreckt, so dass eine radiale Stützwand 54 gebildet wird, die der Anlage des Reifens 34 dient, wie nachstehend näher beschrieben ist. Die oben beschriebene Ausbildung des Großdurchmesserbereichs 50 der Außenfläche 44 definiert gewissermaßen einen ersten Seitenflansch 55 der einteilig mit dem äußeren Flansch 40 ausgebildet ist, wobei der Seitenflansch 55 teilweise durch die rechte Seitenfläche 46 des äußeren Flanschs 40 und teilweise durch die Außenfläche 44 des äußeren Flanschs 40 definiert ist. Auf Wunsch kann der Großdurchmesserbereich 50 auch Bereiche mit größeren und/oder kleineren Durchmessern längs der Breite der Stützwand 54 und der rechten Seitenfläche 46 enthalten. Derartige Variationen beinhalten Durchmesser, die größer sind, als der nominelle Durchmesser des Kleindurchmesserbereichs 52.

Der innere Teil der Stützwand 54 -schneidet den Kleindurchmesserbereich 52 der Außenfläche 44. Der Kleindurchmesserbereich 52 erstreckt sich von der Stützwand 54 bis hin zu der linken Seitenfläche 48 des äußeren Flanschs 40. In dem gezeigten Ausführungsbeispiel ist der Kleindurchmesserbereich 52 mit einem konstanten Durchmesser versehen und erstreckt sich ohne Unterbrechung bis hin zur linken Seitenfläche 48. Auf Wunsch kann der Kleindurchmesserbereich 52 auch Bereiche mit größeren und/oder kleineren Durchmessern zwischen der Stützwand 54 und der linken Seitenfläche 48 enthalten. Derartige Variationen beinhalten Durchmesser, die kleiner sind, als der nominelle Durchmesser des Großdurchmesserbereichs 50.

Wie in Fig. 3 dargestellt, enthält der ringförmige Halteflansch 36 den ersten ringförmigen seitlichen Abschnitt 56, der auf der linken Seitenfläche 48 des äußeren Flanschs 40 des Rades 32 aufliegt, und einen zweiten ringförmigen äußeren Abschnitt 58, der sich im rechten Winkel an das äußere Ende des seitlichen Abschnitts 56 anschließt und sich in Richtung eines mittleren Bereichs der Außenfläche 44 erstreckt. Der äußere Abschnitt 58 endet an einer zweiten Stützwand 60, wobei sich die Stützwand 60 in einem rechten Winkel α2 zum Kleindurchmesserbereich 52 erstreckt und wobei sich ein Schenkel des Winkels α2 zwischen dem Kleindurchmesserbereich 52 und der Umfangsfläche des ringförmigen Halteflansches 36 erstreckt.

Der ringförmige Halteflansch 36 ist durch mehrere Schrauben 62, die in Sackloch-Gewindebohrungen 64 an der linken Seitenfläche 48 geschraubt werden, an der linken Seitenfläche 48 des äußeren Flanschs 40 befestigt. Die Gewindebohrungen 64 können sich auch durch den gesamten äußeren Flansch 40 bis hin zur rechten Seitenfläche 46 erstrecken, was jedoch nicht notwendig ist, da geeignete Sicherungsvorkehrungen durch die dargestellten Gewindebohrungen 64 erreicht werden können. Gleichermaßen sei darauf hingewiesen, dass durch den Reifen 34 hindurch keine Befestigungsmittel geführt werden und keine Befestigungsvorkehrungen, wie z. B. Hülsen oder dergleichen, in das Reifenmaterial eingegossen werden müssen, um die Montage des Reifens 34 auf das Rad 32 zu ermöglichen. Dementsprechend ist der Reifen 34 frei von Befestigungsmaterialien, welche zur Befestigung des Reifens 34 auf dem Rad 32 durch den Reifen 34 hindurchführen.

Der ringförmige Halteflansch 36 bildet als separates und eigenständiges Element mit dem äußeren Abschnitt 58 einen zweiten Seitenflansch 57, der benachbart zur Außenfläche 44 des äußeren Flanschs 40 ist und dem ersten Seitenflansch 55, der durch den Großdurchmesserbereich 50 ausgebildet ist, gegenüber liegt. Die Länge des ringförmigen äußeren Abschnitts 58 des zweiten Seitenflanschs 57 definiert die Breite W3 des zweiten Seitenflanschs 57. Vorzugsweise besitzen die Breiten W1 und W3 des ersten und zweiten Seitenflansches 55, 57 die gleichen Abmaße, wodurch eine symmetrische Auflagefläche für den Reifen 34 geschaffen wird.

Wie besonders deutlich aus Fig. 3 hervorgeht, ist der Reifen 34 ein einheitlicher, nicht luftgefüllter Reifen. Der Reifen 34 hat ein Reifenäußeres, das eine innere Fläche 66, eine äußere Fläche 68, eine rechte Seitenfläche 70 eine linke Seitenfläche 72 und eine erste und zweite Vertiefung 74, 76 enthält, wobei die Vertiefungen 74, 76 sich ins Reifeninnere zwischen der inneren Fläche 66 und den entsprechenden Seitenflächen 70, 72 erstrecken. Vorzugsweise wird durch die äußere Fläche 68 des Reifens 34 der Umfang des Radaufbaus 30 definiert, wie auch im Ausführungsbeispiel dargestellt ist.

Die Vertiefungen 74, 76 im Reifen 34 definieren entsprechende seitlich ausgerichtete Flächen 78, 80, die an die Stützwände 54, 60 der Seitenflansche 55, 57 angrenzen. Solch ein Angrenzen zwischen den seitlich ausgerichteten Flächen 78, 80 des Reifens 34 und den Stützwänden 54, 60 des Rades 32 stabilisiert den Reifen 34 gegen seitliche Bewegungen gegenüber dem Rad 32.

Mehrere Drähte 82, wie z.B. Stahldrähte, Nylondrähte oder Kunststoffdrähte, sind nahe der inneren Fläche 66 des Reifens 34 in den Reifen 34 eingebettet bzw. eingeformt. Die Drähte 82 besitzen solche Dehnungseigenschaften, dass eine Ausdehnung des Durchmessers des Reifens 34 an der inneren Fläche 66 begrenzt ist. Der Durchmesser des Drahtmaterials ist ausreichend gering, damit die Längsachse des Drahtes radial innerhalb der Außenkanten der Seitenflansche 55, 57 liegt, so dass axiale Rückhaltekräfte der Stützwände 54, 60 radial außerhalb der Massenschwerpunkte der Drähte 82 wirksam sind und in Kombination mit dem gegenseitigen Wechselspiel zwischen Seitenflansch 55, 57 und Reifen 34, die Drähte 82 tendenziell radial nach innen zur Außenfläche 44 des Rades 32 gedrängt werden.

In Übereinstimmung mit einer solchen Ausbildung, ist die innere Fläche 66 des Reifens 34 nicht in der Lage, sich über die äußeren Durchmesserbegrenzungen der Seitenflansche 55, 57 hinaus auszudehnen und die Seitenflansche 55, 57 halten den Reifen 34 wirkungsvoll in einer seitlich stabilen Lage auf dem Rad 32. Zu diesem Zweck kann vorzugsweise ein Drahtmaterial ausgewählt werden, wie es auch bei Reifen bekanntermaßen eingesetzt wird. Hierbei sind vorzugsweise Stahldrähte einzusetzen.

Insgesamt hindern das Streckvermögen des Reifenelastomers in Kombination mit den begrenzten Streckeigenschaften des Drahtmaterials den Reifen 34 effektiv daran, sich derart radial auszudehnen und den Durchmesser an der inneren Fläche 66 so weit ansteigen zu lassen, dass der Reifen 34 in der Lage ist seitlich über einen der Seitenflansche 55, 57 und damit vom Rad 32 zu rutschen.

Im Zusammenhang damit, den Reifen 34 seitlich stabil auf dem Rad 32 zu halten, können die Werte für die Winkel α1 und α2 im Bereich von 45° bis 135° liegen. Unterhalb von 45° könnten die Stützwände 54, 60 bewirken, dass während des Betriebs des Radaufbaus 30 der Reifen von der Oberfläche des Rades 32 angehoben wird, da der Grenzbereich für eine Tragfähigkeit der Stützwände 54, 60 erreicht ist. Oberhalb von 135° könnten die Stützwände 54, 60 bewirken, dass der Reifen während des Betriebes des Radaufbaus 30 über einen der Seitenflansche 55, 57 rutscht. Vorzugsweise betragen die Winkel α1, α2 ca. 60° bis ca. 120°. Weitere bevorzugte Winkel α1, α2 betragen ca. 75 bis ca. 105°. Die abgebildeten Winkel α1, α2 betragen 90°.

' Obwohl an der Kontaktfläche der Außenfläche 44 des Rades 32 und der inneren Fläche 66 des Reifens 34 ein Klebestoff verwendet werden kann und es in der Technik durchaus üblich ist, derartige Klebstoffe zu verwenden, ist es bei dieser Erfindung nicht notwendig Klebstoff einzusetzen. Vorzugsweise wird sogar kein Klebstoff verwendet.

Vielmehr werden zur Sicherung einer entsprechenden Kontaktfläche zwischen Reifen 34 und Rad 32 sowohl geeignete, aufeinander abgestimmte Durchmesser für die innere Fläche 66 des Reifens 34 und für die Außenfläche 44 des Rades 32, als auch geeignete Materialien sowohl für den Reifen 34 als auch für das Rad 32 ausgewählt. Derartige geeignete Grenzflächendurchmesser beinhalten eine Durchmesserdifferenz, in der der Durchmesser der inneren Fläche 66 des Reifens 34 um z.B. ca. -0,5 cm (-0,2 Zoll) kleiner bis ca. 0,1 cm (+0,04 Zoll) größer ist. Der maximale Durchmesserunterschied ist dabei abhängig von den radialen Dehnungseigenschaften des Reifens 34, wie z.B. von der Durchmesseraufweitung. Wenn ein Presssitz vorgesehen ist, wird der Reifen 34 leicht gestreckt auf das Rad 32 aufgezogen, so dass dieser nach der Montage unter Spannung auf dem Rad 32 sitzt und ein fester Reibschluss geschaffen wird. Bei einer positiven Durchmesserdifferenz wird ein mäßiges Durchrutschen zwischen Reifen 34 und Rad 32 toleriert, wenn der Radaufbau 30 ohne Last oder unter leichter Last beansprucht wird.

Wie auch immer das Verhältnis der Durchmesser von Reifen 34 und Rad 32 ausgebildet ist, der kritische Zusammenhang besteht darin, dass der Reifen einen nicht zu lockerem Sitz aufweisen darf und nicht leicht vom Rad 32 geschoben werden kann, nachdem der zweite Seitenflansch 57 bzw. der ringförmige Halteflansch 36 befestigt wurde.

Der Reifen 34 wird auf das Rad 32 montiert, indem zuerst der ringförmige Halteflansch 36 vom Rad 32 entfernt wird. Der Reifen 34 wird dann seitlich aus Richtung der linken Seitenfläche 48 auf die Außenfläche 44 des äußeren Flanschs 40 geschoben. Dabei wird der Reifen 34 so weit wie nötig gedehnt, um der zwischen Reifen 34 und Rad 32 vorliegenden Passung zu entsprechen bzw. sich dieser anzupassen. Der Reifen 34 wird entlang der Außenfläche 44 verschoben, bis die zur Seite ausgerichtete Fläche 78 des Reifens 34 an der Stützwand 54 des ersten Seitenflanschs 55 zur Anlage kommt, wobei sich zwischen dem ersten Seitenflansch 55 und der ersten Vertiefung 74 eine vollständige, oder im Wesentlichen vollständige Grenzflächenbindung einstellt. Der ringförmige Halteflansch 36 wird dann an der linken Seitenfläche 48 auf den äußeren Flansch 40 derart aufgesetzt, dass der äußere Abschnitt 58 des ringförmigen Flanschs 36 in eine im Wesentlichen vollständige Überdeckung mit der zweiten Vertiefung 76 des Reifens 34 gebracht wird. Dann werden Schrauben 62 durch den ringförmigen Flansch 36 geschraubt, mit denen der ringförmige Flansch 36 auf dem Rad 32 befestigt wird. Mit dem als zweiter Seitenflansch angebrachten und gesicherten ringförmigen Flansch 36 ist der Reifen 34 gegen seitliche Bewegungen durch die Seitenflansche 55, 57 gesichert und die Drähte 82 verhindern unerwünschte radiale Ausdehnungen.

Obwohl der Reifen 34 vorzugsweise nicht an das Rad 32 geklebt ist, wirken Rad 32 und Reifen 34 dennoch als einheitliches Bauteil, wenn zwischen Raupe 17 und Radaufbau 30 eine Kraft übertragen wird. In derartigen Lastzuständen verursachen die von der Raupe 17 auf die äußere Fläche 68 des Reifens 34 übertragenen Radialkräfte ein Reibschluss, der sich zwischen der Außenfläche 44 des Rades 32 und der inneren Fläche 66 des Reifens 34 einstellt. Ein Fachmann auf diesem Gebiet ist in der Lage, geeignete Kautschuks oder Elastomere wie z.B. bestimmte Polyurethanpolymere für den Einsatz im Reifen 34 auszuwählen, so dass gewünschte Elastizitätseigenschaften zur Abdämpfung von Stößen, die sonst vom Boden in das Fahrzeug geleitet würden, und gewünschte Reibeigenschaften zwischen Reifen 34 und Rad 32 sowie Reifen 34 und Raupe 17 erzielt werden.

Entsprechend der oben beschriebenen Installationsprozedur, wird der Reifen 34 entfernt, indem die Schrauben 62 gelöst werden, der ringförmige Flansch 36 von der linken Seitenfläche 48 des Rades 32 entfernt und der Reifen 34 seitlich vom Rad 32 geschoben wird. Anschließend kann ein neuer Reifen wie oben beschrieben montiert werden.

Erfindungsgemäße Radaufbauten 30, wie oben beschrieben, eignen sich für den Einsatz als mittlere Leiträder 28. Des Weiteren können erfindungsgemäße Radaufbauten 30 als Laufräder 26 und als Spannräder eingesetzt werden. Bei einem Einsatz des erfindungsgemäßen Radaufbaus 30 als Laufrad 26, kommt auch ein Einsatz als führendes Laufrad in Frage, welches unterstützende Funktionen zur Steuerung des Traktors oder Fahrzeugs übernehmen kann.

Auch wenn die Erfindung lediglich anhand eines Ausführungsbeispiels beschrieben wurde, erschließen sich für den Fachmann im Lichte der Patentansprüche 1 bis 17 viele verschiedenartige Alternativen, Modifikationen und Varianten, die unter die vorliegende Erfindung fallen.

## Patentansprüche

1. Radaufbau für einen Raupenantrieb, wobei der Radaufbau (30) enthält:
a) einen Reifen (34) mit einem einen Elastomer enthaltenden Reifenkörper, wobei der Reifenkörper enthält:
(i) ein Reifenäußeres mit einer Reifeninnenfläche (66), einer Reifenaußenfläche (68), erste und zweite Reifenseitenflächen (70, 72), die sich im Wesentlichen zwischen der Reifenaußenfläche (68) und der Reifeninnenfläche (66) erstrecken, und wenigstens einer ersten am Reifenäußeren im Bereich zwischen der Reifeninnenfläche (66) und einer ersten Reifenseitenfläche (70) ausgebildeten ersten Vertiefung (74), welche eine wenigstens erste teilweise radial ausgerichtete Stützfläche (78) definiert, und
(ii) mehrere Drähte (82), die nahe der Reifeninnenfläche (66) im Reifenkörper verlaufen und die in das Elastomer eingebettet und von diesem umgeben sind,
b) ein Rad (32) mit
(i) einem inneren Flansch (38), für die Montage des Rades (32) an eine Achse zur drehbaren Lagerung des Rades (32) auf der Achse,
(ii) einem äußeren Flansch (40), mit gegenüberliegenden ersten und zweiten Radseitenflächen (46, 48), und einer zu einer äußeren Fläche des Rades (32) korrespondierenden Radaußenfläche (44), wobei die Radaußenfläche (44) des Rades (32) die Reifeninnenfläche (66) des Reifens (34) auf einer Rad-Reifen-Grenzfläche aufnimmt und wobei die Reifeninnenfläche und die Radaußenfläche (44) derart aufeinander abgestimmt ausgebildet sind, dass der Reifen (34) mit einer Übergangspassung auf das Rad (32) montierbar ist, und
(iii) wenigstens einem Steg (42), der den inneren Flansch (38) mit dem äußeren Flansch (40) verbindet,
c) einen im Bereich der ersten Seitenfläche (46) des äußeren Flansches (40) ausgebildeten ersten Seitenflansch (55), welcher sich über die Radaußenfläche (44) des äußeren Flansches (40) hinaus radial nach außen erstreckt und welcher eine erste Stützwand (54) bildet, die zu einem mittleren Bereich der Radaußenfläche (44) gerichtet ist und die erste Stützfläche (78) des Reifens (34) abstützt, und
d) einen als separates Element ausgebildeten zweiten Seitenflansch (57), der an der zweiten Seitenfläche (48) des äußeren Flanschs (40) anliegt und eine zweite Stützwand (60) enthält, die zu einem mittleren Bereich der Radaußenfläche (44) gerichtet ist, wobei der zweite Seitenflansch (57) lösbar an den äußeren Flansch (40) des Rades (32) montiert ist und wobei die zweite Stützwand (60) eine zur Seite ausgerichtete zweite Stützfläche (80) des Reifenäußeren abstützt.

2. Radaufbau nach Anspruch 1, **dadurch gekennzeichnet, dass** am Reifenäußeren im Bereich zwischen der Reifeninnenfläche (66) und der zweiten Reifenseitenfläche (72) eine zweite Vertiefung (76), ausgebildet ist, welche eine zur Seite gerichtete Stützfläche (80) definiert, die von der Stützwand (60) des zweiten Seitenflansches (57) abgestützt wird.

3. Radaufbau nach Anspruch 2, **dadurch gekennzeichnet, dass** die Radaußenfläche (44) des äußeren Flanschs (40) einen Kleindurchmesserbereich (52) mit einem ersten Durchmesser enthält, der sich ausgehend von der zweiten Seitenfläche (48) des Rades (32) in Richtung der ersten Seitenfläche (46) wenigstens auf 60% der Radbreite erstreckt, und wobei die Radaußenfläche (44) des Rades (32) des Weiteren einen sich an den Kleindurchmesserbereich (52) anschließenden und sich zur ersten Seitenfläche (48) erstreckenden Großdurchmesserbereich (50) mit einem zweiten. Durchmesser aufweist, der den ersten Seitenflansch (55) bildet, wobei der zweite Durchmesser größer ist als der erste Durchmesser.

4. Radaufbau nach Anspruch 3, **dadurch gekennzeichnet, dass** der zweite Seitenflansch (57) einen dritten Außendurchmesser aufweist und das der zweite und der dritte Außendurchmesser in etwa gleich groß sind.

5. Radaufbau nach Anspruch 4, **dadurch gekennzeichnet, dass** der Unterschied zwischen den Durchmesserbeträgen des ersten und des zweiten bzw. des dritten Durchmessers größer ist als die Dehnungsfähigkeit der Verbindung aus Draht (82) und Elastomer des Reifens (34), um bei montiertem zweiten Seitenflansch (57) ein seitliches Abrutschen des Reifens (34) vom Rad (32) zu verhindern.

6. Radaufbau nach einem der Ansprüche 2 bis 5, **dadurch gekennzeichnet, dass** der zweite Seitenflansch, (57) einen mit Bohrungen versehenen sich radial erstreckenden ringförmigen Körper (56) enthält, wobei die Bohrungen Befestigungsmittel (62), insbesondere Schrauben aufnehmen, welche den ringförmigen Körper (56) lösbar an die zweite Radseitenfläche (48) befestigen, und dass der zweite Seitenflansch (57) einen ringförmigen äußeren Abschnitt (58) aufweist, der sich ausgehend vom ringförmigen Körper (56) zwischen der Radaußenfläche (44) des äußeren Flanschs (40) axial in die zweite Vertiefung (76) in Richtung des mittleren Bereichs der Radaußenfläche (44) erstreckt.

7. Radaufbau nach einem der vorhergehenden Ansprüche, **dadurch gekennzeichnet, dass** die Drähte (82) in axialer Richtung nebeneinander angeordnete Stahldrähte oder Stahlseile sind.

8. Radaufbau nach einem der Ansprüche 2 bis 7, **dadurch gekennzeichnet, dass** die äußere Fläche (68) des Reifens (34) über die gesamte Breite des Radaufbaus (30) die Außenfläche des Radaufbaus (30) bildet.

9. Radaufbau nach einem der vorhergehenden Ansprüche, **dadurch gekennzeichnet, dass** der Reifen (34) frei ist von Befestigungsmitteln, die sich zur Fixierung des Reifens (34) auf dem Rad (32) durch denselben erstrecken und/oder das zur Fixierung keine Klebestoffe auf der Rad-Reifen-Grenzfläche verwendet werden.

10. Radaufbau nach einem der Ansprüche 3 bis 9, **dadurch gekennzeichnet, dass** der Kleindurchmesserbereich (52) sich über wenigstens 70% entlang der Breite des Rades (32), vorzugsweise über 80% entlang der Breite des Rades (32) zwischen der ersten und zweiten Seitenfläche (46, 48) erstreckt.

11. Radaufbau nach einem der vorhergehenden Ansprüche, **dadurch gekennzeichnet, dass** der Abstand zwischen einer Mittellinie (C) und der ersten Seitenfläche (46) des äußeren Flansches (40) größer ist als der Abstand zwischen der Mittellinie (C) und der zweiten Seitenfläche (48), wobei sich die Mittellinie (C) zentriert durch die Mitte des Steges (42) erstreckt und zum Kleindurchmesserbereich (52) senkrecht steht.

12. Radaufbau nach Anspruch 11, **dadurch gekennzeichnet, dass** die Summe des Abstandes zwischen der Mittellinie (C) und der zweiten Seitenfläche (48) einerseits und der Breite des zweiten Seitenflansches (57) andererseits im Wesentlichen gleich dem Abstand zwischen der Mittellinie (C) und der ersten Seitenfläche (46) ist.

13. Radaufbau nach einem der vorhergehenden Ansprüche, **dadurch gekennzeichnet, dass** der Elastomer des Elastomerreifens (32) ein Kautschukgemisch aufweist.

14. Radaufbau nach einem der Ansprüche 1 bis 13, **dadurch gekennzeichnet, dass** die erste und/oder zweite Stützwand (54, 60) hinsichtlich der axialen Ausrichtung der Radaußenfläche (44) des äußeren Flanschs (40) Winkel (α1, α2) einschließen, die nicht größer als 135° und nicht kleiner als 45° sind.

15. Raupenantrieb mit einer Raupe (17), wobei die Raupe (17) um eine Mehrzahl von Rädern (24, 26, 28) montiert ist, von denen wenigstens eines ein mit einem Antriebsstrang (20) in Verbindung stehendes Antriebsrad (24) ist und wobei wenigstens eines der Mehrzahl der Räder (24, 26, 28) einen Radaufbau (30) entsprechend eines der Ansprüche 1 bis 14 enthält.

16. Raupenfahrzeug mit einem Rahmen (12), einer Antriebsmaschine (18), wenigstens einem Raupenlaufwerk (16) und einem Antriebsstrang (20), der eine Antriebskraft von der Antriebsmaschine (18) zum Raupenlaufwerk (16) überträgt, wobei das Raupenlaufwerk (16) eine Raupe (17) und eine Mehrzahl von Rädern (24, 26, 28) enthält, um welche die Raupe (17) montiert ist, und wobei wenigstens eines der Räder (24, 26, 28) einen Radaufbau (30) entsprechend der Ansprüche 1 bis 14 enthält.

17. Raupenfahrzeug nach Anspruch 16, **dadurch gekennzeichnet, dass** der Radaufbau (30) ein mittleres Leitrad (28) und/oder ein führendes Laufrad (26) darstellt.

## Claims

1. Wheel assembly for an endless track drive system, wherein the wheel assembly (30) includes:
a) a tyre (34) with a tyre body comprising an elastomeric material, wherein the tyre body includes:
i) a tyre exterior with a tyre inner surface (66), a tyre outer surface (68), first and second tyre side surfaces (70, 72) extending essentially between the outer surface (68) and the inner surface (66) of the tyre, and at least one first recess (74), which is configured on the tyre exterior in the region between the tyre inner surface (66) and a first tyre side surface (70), said first recess defining at least a first support surface (78) oriented partially radially, and
ii) a plurality of cables (82), which run close to the tyre inner surface (66) in the tyre body and are embedded in and surrounded by the elastomeric material,
b) a wheel (32) with
(i) an inner flange (38) for mounting the wheel (32) on an axle to rotatably hold the wheel (32) on the axle,
(ii) an outer flange (40) with opposing first and second wheel side surfaces (46, 48) and a wheel outer surface (44) corresponding to an outer surface of the wheel (32), wherein the outer surface (44) of the wheel (32) receives the inner surface (66) of the tyre (34) on a wheel-tyre interface, and wherein the tyre inner surface and the wheel outer surface (44) are configured to match one another in such a way that the tyre (34) can be mounted on the wheel (32) with a snug fit, and
(iii) at least one web (42), which connects the inner flange (38) to the outer flange (40),
c) a first side flange (55), which is configured in the region of the first side surface (46) of the outer flange (40), extends radially outwards beyond the wheel outer surface (44) of the outer flange (40) and forms a first support wall (54), which faces a central region of the wheel outer surface (44) and supports the first support surface (78) of the tyre (34), and
d) a second side flange (57), which is configured as a separate element, abutting against the second side surface (48) of the outer flange (40) and comprising a second support wall (60) facing a central region of the wheel outer surface (44), wherein the second side flange (57) is removably mounted on the outer flange (40) of the wheel (32) and wherein the second support wall (60) supports a side-facing second support surface (80) of the tyre exterior.

2. Wheel assembly according to Claim 1, **characterised in that** a second recess (76) is configured on the tyre exterior in the region between the tyre inner surface (66) and the second tyre side surface (72), said second recess defining a side-facing support surface (80), which is supported by the support wall (60) of the second side flange (57).

3. Wheel assembly according to Claim 2, **characterised in that** the wheel outer surface (44) of the outer flange (40) comprises a small diameter portion (52) with a first diameter extending from the second side surface (48) of the wheel (32) towards the first side surface (46) along at least 60% of the wheel width, and wherein the outer surface (44) of the wheel (32) additionally has a large diameter portion (50) adjoining the small diameter portion (52) and extending to the first side surface (48) and having a second diameter, which forms the first side flange (55), wherein the second diameter is greater than the first diameter.

4. Wheel assembly according to Claim 3, **characterised in that** the second side flange (57) has a third outside diameter, and that the second and the third outside diameters are approximately equal in size.

5. Wheel assembly according to Claim 4, **characterised in that** the difference between the diameter amounts of the first and the second or the third diameter is greater than the stretch capability of the combination of the cables (82) and elastomeric material of the tyre (34) in order to prevent the tyre (34) from slipping laterally off the wheel (32) when the second side flange (57) is mounted.

6. Wheel assembly according to one of Claims 2 to 5, **characterised in that** the second side flange (57) comprises a radially extending annular body (56) provided with apertures, wherein the apertures receive fasteners (62), in particular screws, which removably fasten the annular body (56) to the second wheel outer surface (48), and that the second side flange (57) has an annular outer portion (58), which from the annular body (56) extends between the wheel outer surface (44) of the outer flange (40) axially into the second recess (76) towards the central region of the wheel outer surface (44).

7. Wheel assembly according to one of the preceding claims, **characterised in that** the cables (82) are steel wires or steel cables arranged adjacent to one another in axial direction.

8. Wheel assembly according to one of Claims 2 to 7, **characterised in that** the outer surface (68) of the tyre (34) forms the outer surface of the wheel assembly (30) over the entire width of the wheel assembly (30).

9. Wheel assembly according to one of the preceding claims, **characterised in that** the tyre (34) is free from fasteners, which for fastening the tyre (34) on the wheel (32) extend through this, and/or that for the fastening no adhesives are used on the wheel-tyre interface.

10. Wheel assembly according to one of Claims 3 to 9, **characterised in that** the small diameter portion (52) extends along at least 70% of the width of the wheel (32), preferably along 80% of the width of the wheel (32), between the first and second side surface (46, 48).

11. Wheel assembly according to one of the preceding claims, **characterised in that** the distance between a centre line (C) and the first side surface (46) of the outer flange (40) is greater than the distance between the centre line (C) and the second side surface (48), wherein the centre line (C) extends centred through the centre of the web (42) and stands perpendicular to the small diameter portion (52).

12. Wheel assembly according to Claim 11, **characterised in that** the sum of the distance between the centre line (C) and the second side surface (48), on the one hand, and the width of the second side flange (57), on the other, is essentially equal to the distance between the centre line (C) and the first side surface (46).

13. Wheel assembly according to one of the preceding claims, **characterised in that** the elastomeric material of the elastomeric tyre (32) comprises a rubber compound.

14. Wheel assembly according to one of Claims 1 to 13, **characterised in that** in view of the axial orientation of the wheel outer surface (44) of the outer flange (40), the first and/or second support wall (54, 60) enclose angles (α1, α2), which are not larger than 135° and not smaller than 45°.

15. Endless track drive system with an endless track (17), wherein the endless track (17) is mounted around a plurality of wheels (24, 26, 28), of which at least one is a drive wheel (24) connecting with a drive train (20), and wherein at least one of the plurality of wheels (24, 26, 28) comprises a wheel assembly (30) corresponding to one of Claims 1 to 14.

16. Tracked vehicle comprising a frame (12), a prime mover (18), at least one track assembly (16) and a drive train (20), which transmits a drive force from the prime mover (18) to the track assembly (16), wherein the track assembly (16) comprises an endless track (17) and a plurality of wheels (24, 26, 28), around which the endless track (17) is mounted, and wherein at least one of the wheels (24, 26, 28) comprises a wheel assembly (30) corresponding to one of Claims 1 to 14.

17. Tracked vehicle according to Claim 16, **characterised in that** the wheel assembly (30) constitutes a mid-wheel roller (28) and/or a leading idler wheel (26).

## Revendications

1. Structure de roue pour un entraînement à chenille, la structure de roue (30) comportant :
a) un pneu (34) avec un corps de pneu contenant un élastomère, le corps de pneu comportant :
(i) une partie de pneu extérieure avec une face intérieure (66), une face extérieure (68), une première et une deuxième face latérale (70, 72), qui s'étendent sensiblement entre la face extérieure (68) et la face intérieure (66), et au moins un premier creux (74), qui est réalisé sur la partie de pneu extérieure dans la zone entre la face intérieure (66) et une première face latérale (70) et qui définit au moins une première surface d'appui (78) orientée en partie radialement, et
(ii) plusieurs fils (82), qui s'étendent dans le corps de pneu à proximité de la face intérieure (66) et qui sont enrobés dans l'élastomère et entourés par celui-ci,
b) une roue (32) comportant
(i) un flanc intérieur (38) pour le montage de la roue (32) sur un essieu en vue d'un montage rotatif de la roue (32) sur l'essieu,
(ii) un flanc extérieur (40) avec des faces latérales (46, 48) opposées, et une face extérieure (44) correspondant à une surface extérieure de la roue (32), la face extérieure (44) de la roue (32) recevant la face intérieure (66) du pneu (34) sur une interface roue-pneu et la face intérieure du pneu et la face extérieure de la roue (44) étant adaptées l'une à l'autre de telle sorte que le pneu (34) peut être monté sur la roue (32) avec un ajustement de transition, et
(iii) au moins une entretoise (42), par laquelle le flanc intérieur (38) est relié au flanc extérieur (40),
c) un premier flanc latéral (55), qui est réalisé dans la zone de la première face latérale (46) du flanc extérieur (40) et qui s'étend radialement vers l'extérieur au-delà de la face extérieure de roue (44) du flanc extérieur (40) et forme une première paroi d'appui (54), qui est orientée vers une zone centrale de la face extérieure de roue (44) et sur laquelle vient en appui la première surface d'appui (78) du pneu (34), et
d) un deuxième flanc latéral (57), qui est réalisé sous forme d'élément séparé et qui est en appui contre la deuxième face latérale (48) du flanc extérieur (40) et comporte une deuxième paroi d'appui (60), qui est orientée vers une zone centrale de la face extérieure de roue (44), le deuxième flanc latéral (57) étant monté amovible contre le flanc extérieur (40) de la roue (32) et la deuxième paroi d'appui (60) formant un appui pour une deuxième surface d'appui (80), orientée vers le côté, dans la partie de pneu extérieure.

2. Structure de roue selon la revendication 1, **caractérisée en ce que** sur la partie de pneu extérieure, dans la zone entre la face intérieure de pneu (66) et la deuxième face latérale du pneu (72), est formé un deuxième creux (76), qui définit une surface d'appui (80), qui est orientée vers le côté, dans la partie de pneu extérieure, et qui est en appui sur la paroi d'appui (60) du deuxième flanc latéral (57).

3. Structure de roue selon la revendication 2, **caractérisée en ce que** la face extérieure de roue (44) du flanc extérieur (40) comporte une zone de petit diamètre (52) ayant un premier diamètre qui s'étend à partir de la deuxième face latérale (48) de la roue (32) vers la première face latérale (46) sur au moins 60 % de la largeur de la roue, et la face extérieure (44) de la roue (32) comportant, par ailleurs, une zone de grand diamètre (50), qui est aboutée à la zone de petit diamètre (52) et s'étend vers la première face latérale (48) et qui a un deuxième diamètre qui forme le premier flanc latéral (55), le deuxième diamètre étant supérieur au premier diamètre.

4. Structure de roue selon la revendication 3, **caractérisée en ce que** le deuxième flanc latéral (57) a un troisième diamètre extérieur et le deuxième diamètre et le troisième diamètre extérieur sont pratiquement égaux.

5. Structure de roue selon la revendication 4, **caractérisée en ce que** la différence entre les valeurs du premier et du deuxième et du troisième diamètre est supérieure à la capacité de dilatation de l'assemblage formé par le fil (82) et l'élastomère du pneu (34), afin d'empêcher que le pneu (34) ne glisse latéralement de la roue (32) lorsque le deuxième flanc latéral (57) est monté.

6. Structure de roue selon l'une quelconque des revendications 2 à 5, **caractérisée en ce que** le deuxième flanc latéral (57) comporte un corps annulaire (56), muni de forures et s'étendant dans le sens radial, les forures étant destinées à recevoir des moyens de fixation (62), en particulier des vis, par lesquels le corps annulaire (56) est fixé amovible contre la deuxième face latérale de roue (48), et **en ce que** le deuxième flanc latéral (57) comporte un tronçon extérieur (58) annulaire, qui s'étend à partir du corps annulaire (56) entre la face extérieure de roue (44) du flanc extérieur (40) dans le sens axial dans le deuxième creux (76) en direction de la zone centrale de la face extérieure de roue (44).

7. Structure de roue selon l'une quelconque des revendications précédentes, **caractérisée en ce que** les fils (82) sont des fils d'acier ou des câbles d'acier juxtaposés dans la direction axiale.

8. Structure de roue selon l'une quelconque des revendications 2 à 7, **caractérisée en ce que** la face extérieure (68) du pneu (34) forme, sur toute la largeur de la structure de roue (30), la face extérieure de la structure de roue (30).

9. Structure de roue selon l'une quelconque des revendications précédentes, **caractérisée en ce que** le pneu (34) est exempt de moyens de fixation qui, pour la fixation du pneu (34) sur la roue (32), s'étendent à travers ceux-ci et/ou aucune substance adhésive n'est utilisée sur l'interface roue-pneu en vue de la fixation.

10. Structure de roue selon l'une quelconque des revendications 3 à 9, **caractérisée en ce que** la zone de petit diamètre (52) s'étend sur au moins 70 % de la largeur de la roue (32), de préférence sur 80 % de la largeur de la roue (32) entre la première et la deuxième face latérale (46, 48).

11. Structure de roue selon l'une quelconque des revendications précédentes, **caractérisée en ce que** la distance entre une ligne médiane (C) et la première face latérale (46) du flanc extérieur (40) est supérieure à la distance entre la ligne médiane (C) et la deuxième face latérale (48), la ligne médiane (C) passant de manière centrée à travers le milieu de l'entretoise (42) et étant perpendiculaire à la zone de petit diamètre (52).

12. Structure de roue selon la revendication 11, **caractérisée en ce que** la somme de la distance entre la ligne médiane (C) et la deuxième face latérale (48), d'une part, et la largeur du deuxième flanc latéral (57), d'autre part, est sensiblement égale à la distance entre la ligne médiane (C) et la première face latérale (46).

13. Structure de roue selon l'une quelconque des revendications précédentes, **caractérisée en ce que** l'élastomère du pneu (32) comporte un mélange de caoutchouc.

14. Structure de roue selon l'une quelconque des revendications 1 à 13, **caractérisée en ce que** la première et/ou la deuxième paroi d'appui (54, 60) forment avec l'orientation axiale de la face extérieure de roue (44) du flanc extérieur (40) des angles (α1, α2), qui ne sont ni supérieurs à 135° ni inférieurs à 45°.

15. Entraînement à chenille comportant une chenille (17), dans lequel la chenille (17) est montée autour d'une pluralité de roues (24, 26, 28), parmi lesquelles au moins une roue est un barbotin (24) en liaison avec la ligne de transmission (20) et dans lequel au moins une roue parmi la pluralité de roues (24, 26, 28) a une structure de roue (30) selon les revendications 1 à 14.

16. Véhicule sur chenilles, comportant un châssis (12), un moteur d'entraînement (18), au moins un train de roulement à chenille (16) et une ligne de transmission (20), qui transmet une force d'entraînement à partir du moteur d'entraînement (18) vers le train de roulement à chenille (16), le train de roulement à chenille (16) comportant une chenille (17) et une pluralité de roues (24, 26, 28) autour desquelles la chenille (17) est montée, et au moins une des roues (24, 26, 28) a une structure de roue (30) selon les revendications 1 à 14.

17. Véhicule sur chenilles selon la revendication 16, **caractérisé en ce que** la structure de roue (30) constitue une roue de guidage (28) centrale et/ou une roue de roulement motrice (26).
